# EUROPEAN PATENT APPLICATION

(11) **EP 4 235 261 A2**
(43) Date of publication of application: **30.08.2023**
(21) Application number: 23169172.6
(22) Date of filing: 13.10.2020
(51) Int. Cl.: G02B 27/01

(54) **IMPROVED SYSTEM FOR DISPLAYING INFORMATION**

(30) Priority: 15.10.2019 IT 201900018836
(62) Divisional of application: 20201620.0
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described is a self-propelled operating machine (1) equipped with a cabin (13) and a system for displaying information to an operator (O) present in the cabin (13).

The display system includes at least one mobile display element (3).

## Description

This invention relates to an improved system for displaying information to the operators of self-propelled operating machines.

It is known that display units are mounted in the panel of the cabins of telehandlers or "telescopic lifts" which show information to the operator which is necessary for correct control of the machine, such as load diagrams, speed of translation, data measured by sensors distributed on the vehicle and, above all, indices representing the stability condition of the vehicle.

One problem often reported by the operators is that, whilst they are operating telescopic lifting arm, it is necessary for them to carefully observe the lifting apparatus and the load carried by it, both in order to correctly perform the operations which are being carried out and for obvious safety reasons; however, for exactly the same reasons and precisely whilst they are operating the arm, the operator must monitor the display in order to be aware of the variation of the various parameters displayed by it.

This situation is rather inconvenient for the operators of the telehandlers, which not only adversely affects the efficiency of the work but may also result in errors in the execution of the manoeuvres.

The technical purpose which forms the basis of the invention is to provide a self-propelled operating machine which overcomes the limits of the prior art described above.

The technical purpose specified is achieved by the operating machine made according to claim 1.

Further features and advantages of the present invention are more apparent in the non-limiting description of a preferred embodiment of the proposed machine, as illustrated in the accompanying drawings, in which:
- Figure 1 is an axonometric view of the machine according to the invention;
- Figure 2 is an axonometric view of the inside of the cabin of the machine of Figure 1, according to a first embodiment; and
- Figures 3 and 4 are views of the inside of the cabin of the machine of Figure 1 in two different operating configurations and according to a second embodiment of the invention.

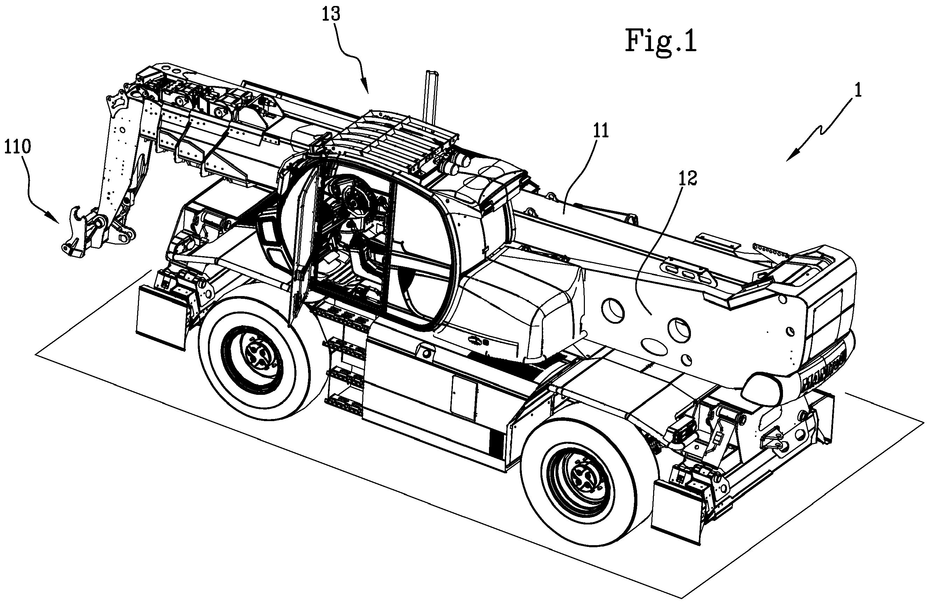

With reference to the accompanying drawings, reference numeral 1 denotes in its entirety a self-propelled operating machine according to the invention. More in detail, the machine 1 according to the invention is preferably a telehandler and may be rotary (such as that of Figure 1) or fixed or also of the articulated type.

The machine 1 proposed comprises a carriage or chassis movable on wheels, a driver's cabin, a telescopic lifting arm 11, which may be mounted on a rotatable platform 12 which, if present, also has the cabin 13, the arm being equipped, at its distal end, with a coupling device 110, also of the type normally in use in the telehandlers made by the Applicant, which allows replacement of the apparatus 111 and its connection to the hydraulic and electronic apparatuses of the machine 1.

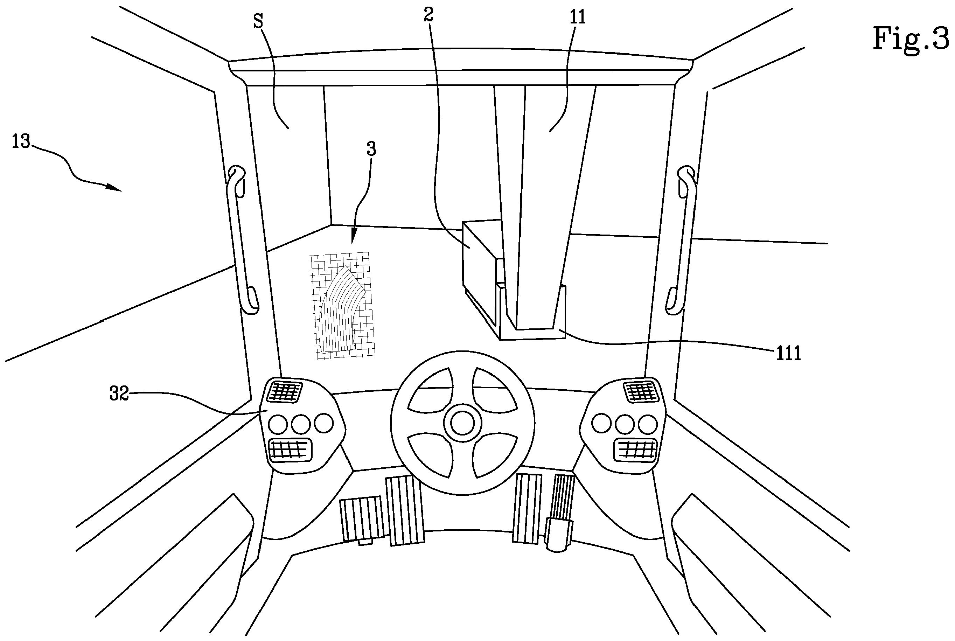

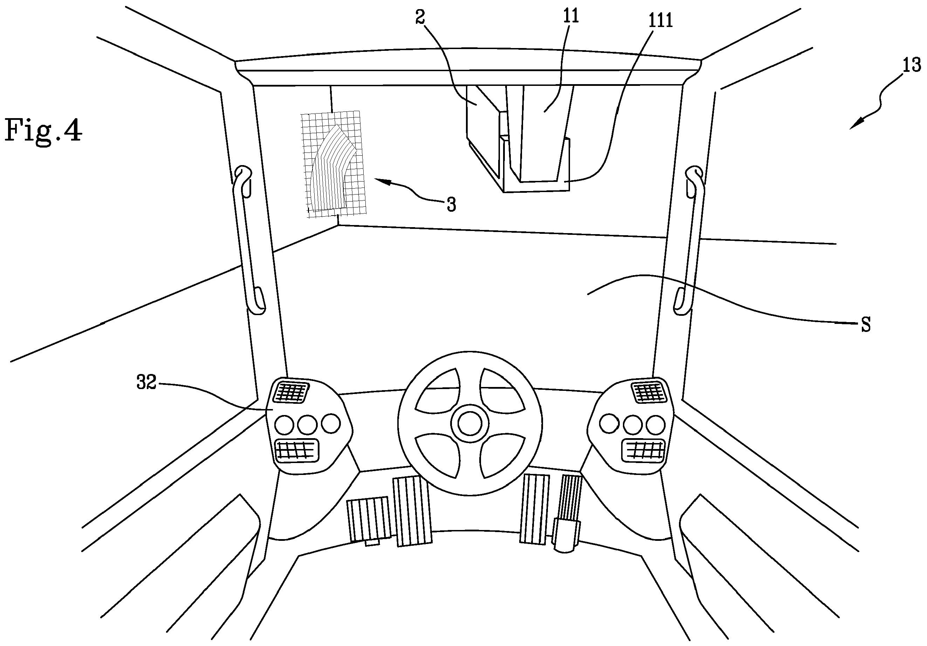

The term apparatus 111, as shown schematically in Figures 3 and 4, means both an accessory for engaging a load 2, such as a fork, a lateral transfer device, a winch, a gripper, etc. and an accessory for lifting persons and, if necessary, also a load, such as a cage.

The arm 11 is articulated to the rotatable platform 12, so as to oscillate vertically, under the actuation of a hydraulic cylinder or similar actuator, between a lower position, substantially horizontal, and an upper position wherein the arm 11 is close to the vertical.

The arm 11 is extensible and retractable and, more precisely, comprises a plurality of segments inserted one in the other, coaxial with each other and designed to translate along the axial direction.

The elongation and retraction of the arm 11 are also produced by one or more hydraulic cylinders, or other actuators.

The rotation of the platform 12 is also produced by a preferably hydraulic actuator, associated for example with a rack, in the same way that it is preferably that the actuator which moves the equipment relative to one or more of its joints is hydraulic.

The hydraulic actuators are subjected to an electro-hydraulic distributor, mounted on the machine 1, which is controlled by means of the commands present in the cab 13, according to known methods.

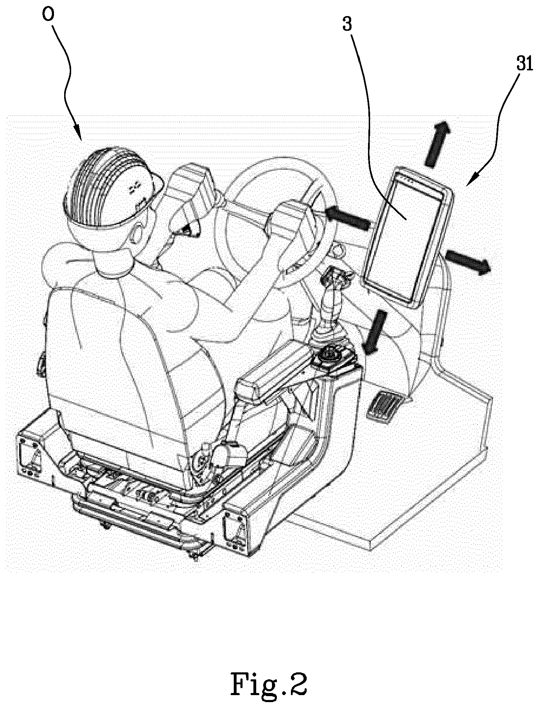

In practice, the machine 1 according to the invention includes commands in the cab 13, such as joystick, pedals, pushbuttons, etc., actuated by the operator O (see Figure 2); by acting on the commands, signals received from the distributor 14 are generated which then adjusts the operation of the actuators of the arm 11, of the apparatus 111 and of the platform 13 (or of other movable elements).

The invention also relates to the case in which the drive actuators are of the electro-mechanical and non-hydraulic type.

According to an important aspect of the invention, the machine 1 includes a system for displaying information to an operator O present in the cabin 13, the system including at least one mobile display element 3.

The mobile display element 3 is especially designed to display information to the operator O concerning the stability condition of the machine, with particular reference to how much the tipping moment to which the machine is subjected is, instant by instant, close to the danger threshold, beyond which there is a limitation or inhibiting of the moments of the arm.

In effect, the telehandlers are equipped with a system for controlling the tipping moment (for example, the longitudinal moment) and have an index representing the degree of vicinity to the dangerous condition.

This index may be, for example, a graduated bar, for example defined by a series of LEDs, positioned on the display.

Moreover, the display element 3 may also display to the operator O the information and the data which, in the prior art described above, are carried by the classic display, that is to say, by way of a non-limiting example, such as the load diagrams, the speed of translation, data measured by sensors distributed on the vehicle, etc.

According to a particular embodiment, which does not form part of the claimed invention, shown in Figure 2, the display element 3 is a "physical" display, in the sense that it is a screen, for example of the touchscreen or "passive" type, prepared in an electronic display device 31, which comprises a casing, a user interface (which may comprise pushbuttons, levers or similar commands, in addition to or as an alternative to the electronics of the touchscreen functionality) and one or more microprocessors or microcontrollers which control the displaying of the operating data of the machine 1 and the transmission of information and commands by means of the above-mentioned user interface.

If the display element 3 is a physical display it may also be defined by the combination of several means for displaying the above-mentioned information, for example a screen plus more one or more physical indicators located of the above-mentioned display device 31.

More in detail, in a particular, non-limiting embodiment of the invention, there may also be the graduated bar formed by the above-mentioned succession of displays, which allows the operator to have an immediate idea of the degree of proximity to the dangerous condition due to the tipping moment detected.

For example, the bar may comprise LEDs of different colours; considering the succession between green LEDs, yellow LEDs and red LEDs gives an intuitive idea of how much the potentially risky condition is imminent.

In addition or alternatively, the graduated index may be represented "virtually" on the screen, that is to say, it is not in the form of LEDs or the like, but graphic indices.

An important aspect of the display element 3 according the invention is that it can be moved, manually and/or automatically, so as to allow it to be positioned inside the cabin 13 in a position convenient for the operator O, especially during use of the operating arm 11.

For this purpose, according to a first embodiment, the display system according to the invention includes a mechanism which supports the display device 31 and allows the movement.

For example, the mechanism may consist of one or more articulated arms or one or more carriages which move along a guide, which extends, for example, along an upright of the cabin 13 or yet other solutions.

If the movement is manual, the mechanism can be reconfigured upon the action of the operator O, who in this case pulls by hand the device 31 equipped with the display 3 to the desired position and the mechanism is also able to keep in position the display device 31, once it has been located where it is most convenient for the operator O of the telehandler. According to another embodiment, in accordance with the claimed invention and shown schematically in Figures 3 and 4, the display system comprises a luminous projection device 32, located inside the cabin 13, designed to project the above-mentioned display element 3 on a surface S, for example the inner surface of the windscreen or a window of the cabin 13, in such a way as to be reflected and seen by the operator O.

In practice, in this case, the projection device 32 sends a light beam which represents a display unit 3 with the information useful for controlling the telehandler 1 and in particular for the execution of the manoeuvres of the telescopic lifting arm 11.

The projection device 32 is designed for adjusting the position of the display 3 projected along the reflecting surface S, that is to say, it is able to move it on the command of the operator O, in the case of manual activation, or automatically, which is an option discussed below.

In this case, the display 3 is not "physical", in the sense that it is not a screen but is "virtual", since it is defined by a reflected light beam, emitted by a projector 32.

In one particular version of the invention, which may be actuated both in the case of a "physical" display and of the "virtual" display, the display 3 in question is moved automatically.

In this case, the machine 1 proposed may include, firstly, means for detecting at least one parameter relating to the position of the operating arm 11 and for producing a position signal, as a function of the position parameter.

The detection means may include one or more position sensors, designed to determine the relative position of the load 2 (or in any case of the apparatus 111), with respect to a reference, for example consisting of the carriage of the machine 1 or the position of the operator O in the cabin 13 or other position.

One of these sensors may measure the angle between the arm 11 and the carriage and another the sliding or elongation of the arm 11 and both may consist of encoders, suitably connected to levers to determine the angle or to cables to determine the length, or position sensors included in the drive cylinders or yet other types of sensors.

In this version, the machine 1 may also include processing means designed to receive the above-mentioned position signal and comprising a positioning module configured to produce a positioning signal as a function of the movement signal and designed to establish the target position of the display element 3.

It should be noted that, in this description, the processing means may comprise processing units which are presented here as divided into separate functional modules for the purpose of describing the functions clearly and completely.

In practice, the processing unit may consist of a single electronic device, also of the type commonly present on this type of machine, such as a control unit, suitably programmed to perform the functions described; the various modules can correspond to hardware units and/or software forming part of the programmed device.

Alternatively or in addition, the functions can be performed by a plurality of electronic devices on which the above-mentioned functional modules can be distributed.

Generally speaking, the processing unit may have one or more microprocessors or microcontrollers for execution of the instructions contained in the memory modules and the above-mentioned functional modules may also be distributed on a plurality of local or remote calculators based on the architecture of the network in which they reside.

According to the embodiment with a physical display 3 which moves thanks to a movement mechanism, the latter may be connected to movement means, for example electric motors, which are designed to receive the above-mentioned movement signal and to actuate the movement mechanism accordingly.

In the case of a solution with a virtual display 3, it is the projection device 32 which is designed to receive the movement signal and to consequently move the projected display element 3, varying the projection direction of the light beam.

Preferably, the positioning module of the processing means is configured in such a way as to produce a movement signal designed to position the display element 3 in a position in which, relative to a viewpoint of an operator O in the cabin 13, it remains close to the apparatus 111 or to the load 2 and preferably it is alongside.

For example, the position of the display 3 may be adjusted in such a way as to be integral with the image of the apparatus 111 or of the load 3 from the point of view of the operator O; in other words, considering the lines of sight from the position of the operator O directed to the display 3 and to the load 2 (or apparatus 111), these might have a substantially constant angular distance.

In the case of a virtual display 3, its representation projected on the surface S of the windscreen could remain at a substantially constant distance with respect to the relative distance of the image of the load 2 (or apparatus 111) as seen by the operator O inside the windscreen.

In particular, the operating arm 11 is able to rise and lower or extend and retract, which, from the perspective of the operator O, always implies that the load 2 and the apparatus 111 which carries it are seen to be lifted or lowered.

For this reason, if the apparatus 111 does not perform lateral movements of the load 2, but is, for example, a fixed fork or a fixed cage, the display 3 will be automatically raised and lowered, as a function of the movement of the arm 11, with a stroke which is adjusted as a function of the vertical excursion of the load 2 (or of the apparatus 111) from the point of view of the operator O, so that the direction of viewing the display 3 is always close to that directed towards the load 2, that is, at a distance in which it is possible to glance from one to the other.

In one case, it will be the display device 31 which rises and lowers (physical display), in the other case it will be the reflection on the inner surface of the windscreen of the light beam which constitutes the virtual display 3.

If, on the other hand, the apparatus 2 also has lateral movements, such as an oscillating winch or a rotary fork, etc., then the position of the display 3 will also be adjusted in a lateral direction, that is, horizontal, as a function of the position of the load 2 (or of the apparatus 111).

## Claims

1. A self-propelled operating machine (1) equipped with a cabin (13) and a system for displaying information to an operator (O) present in the cabin (13), wherein said display system includes at least one mobile display element (3); **characterised in that** said display system comprises a light projection device (32) able to project the above-mentioned display element (3) on a surface (S), adjusting its position.

2. The machine (1) according to the preceding claim, wherein said projection device (32) is positioned in such a way as to project the display element (3) on an inner surface (S) of the windscreen of the cabin (13) or of a relative window.

3. The machine (1) according to any one of the preceding claims, wherein the projection device (32) sends a light beam which represents a display (3) with the information useful for control of the machine.

4. The machine (1) according to the preceding claim, wherein the projection device (32) sends a light beam which represents a display (3) with the information useful for performing the manoeuvres of a telescopic lifting arm (11) of the machine (1).

5. The machine (1) according to any one of the preceding claims, wherein the mobile display element (3) is designed to display information to the operator (O) concerning the stability condition of the machine.

6. The machine (1) according to the preceding claim, comprising a system for controlling a tipping moment, wherein the mobile display element (3) shows an index representing a degree of vicinity to a dangerous condition.

7. The machine (1) according to at least one of claims 2 to 6, wherein the projection device (32) is designed for adjusting the position of the display (3) projected along a reflecting surface on the command of the operator (O).

8. The machine (1) according to any one of the preceding claims, wherein the display element (3) is designed to move automatically.

9. The machine (1) according to the preceding claim, comprising an operating arm (11) designed to lift and move a loading apparatus (111) and:
means for detecting at least one parameter relating to the position of said arm (11) and producing a position signal as a function of the position parameter;
processing means designed to receive said position signal and
comprising a positioning module configured to produce a positioning signal as a function of the movement signal and designed to establish the target position of the display element (3).

10. The machine according to the preceding claim, wherein said detection means comprise one or more position sensors, designed to determine the relative position of a load (2) or of said apparatus (111), with respect to a reference.

11. The machine according to the preceding claim, wherein a sensor is designed to measure an angle between said arm (11) and a carriage movable on wheels of the machine (1) and a sensor is designed to measure an elongation of the arm (11).

12. The machine (1) according to claim 9, wherein the projection device (32) is designed to receive the movement signal and to move the projected display element (3) accordingly.

13. The machine (1) according to at least on of claims 9 to 12, wherein said positioning module is configured in such a way as to produce a movement signal designed to position the display element (3) in a position in which, relative to a viewpoint of an operator (O) in the cabin (13), it remains close to the apparatus (111) or to the load (2).

14. The machine according to the preceding claim and claim 2, wherein a representation of the display element (3) projected on the surface (S) of the windscreen remains at a substantially constant distance with respect to a relative distance of an image of the load (2) or of the apparatus (111) as seen by the operator (O) inside the windscreen.
